# EUROPEAN PATENT SPECIFICATION

(11) **EP 3 910 925 B1**
(45) Date of publication and mention of the grant of the patent: **11.09.2024**
(21) Application number: 19908858.4
(22) Date of filing: 20.12.2019
(51) Int. Cl.: G06Q 50/40, G06Q 10/0631, G06Q 10/02

(54) **MOVEMENT MANAGEMENT SYSTEM, AND MOVEMENT MANAGEMENT METHOD**
BEWEGUNGSVERWALTUNGSSYSTEM UND BEWEGUNGSVERWALTUNGSVERFAHREN
SYSTÈME DE GESTION DE MOUVEMENT, ET PROCÉDÉ DE GESTION DE MOUVEMENT

(30) Priority: 10.01.2019 JP 2019003005
(43) Date of publication of application: 17.11.2021
(73) Proprietor: Hitachi, Ltd., Tokyo 100-8280 (JP)
(72) Inventor: MOCHIZUKI, Tomoyuki, Tokyo 100-8280 (JP)
(74) Representative: Mewburn Ellis LLP
(86) International application number: PCT/JP2019/050191
(87) International publication number: WO 2020/145099

(56) References cited:
- EP-A2- 1 307 064
- WO-A1-2017/221301
- JP-A- 2003 134 552
- JP-A- 2006 270 629
- JP-A- 2012 008 957
- JP-A- H11 355 835
- US-A1- 2011 092 237

## Description

### Technical Field

The present invention relates to a movement management system and a movement management method and, more particularly, to a movement management system and a movement management method that are suitable for application to, for example, the movements of users by mobilities.

### Background Art

A ticketing system for transportation is a system that supports appropriate fare payments by passengers for their usages of the transportation. Conventionally, the passengers have utilized the transportation after their pre-purchases of paper tickets, magnetic cards, or the like.

Nowadays, with the developments of sensor technology and communication technology, systems are appearing, which, by leveraging such technologies, detect the movements of passengers and support automatic fare payments according to the statuses of usages of transportation by the passengers. Such a system does not need any particular actions such as ticket showing and card touching, and thus is called a hand-free ticketing system, a Be-in/Be-out ticketing system, or the like.

Recently, a technology has been disclosed, which, by utilizing wireless technology such as BLUETOOTH (registered trademark), allows a mobile terminal possessed by a passenger to communicate with an on-vehicle terminal of transportation, and detects information regarding the passenger on the basis of establishment information and disconnection information regarding the communication (see US 2011/0153495).

EP 1 307 064 A2 refers to a method for managing location information, related relay device, location information management device and mobile communication system. WO 2017/221301 A1 describes a position management system which is provided with an identification information transmitter, a relaying mobile terminal, and a management device. US 2011/092237 A1 refers to a wireless communication system, management server, mobile base station apparatus and mobile base station control method.

### Summary of the Invention

### Problem to be Solved by the Invention

The technology described in US 2011/0153495 assumes a situation in which the communication between the terminal of the passenger and the on-vehicle terminal is stable. Thus, in a case where the communication between the terminal of the passenger and the on-vehicle terminal is unavailable because of a crowded condition of the transportation, the technology does not work correctly. In particular, for radio waves in the 2.4 GHz band used in BLUETOOTH, a wireless LAN (Local Area Network) or the like, under such a crowed condition of transportation, the radio waves do not sufficiently carry because passengers become shield objects, and thus, the communication sometimes becomes unavailable.

The present invention has been made in view of the above problem, and is intended to provide a movement management system and the like that are capable of further accurately grasping the movements of users by mobilities.

### Means for Solving the Problem

In order to solve the above problem, the subject matter of the independent claims is provided. The dependent claims describe optional embodiments of the invention.

The invention, for example, makes it possible for the management unit to, on the basis of complementary information indicating that terminals being on a mobility have performed near-field communication with each other, identify a situation in which users possessing the terminals are moving by the mobility, and thus, further accurately grasp the movements of the users by the mobility even when the mobility is crowded.

### Advantageous Effect of the Invention

The present invention enables achievement of a highly reliable system.

### Brief Description of the Drawings

FIG. 1 is a diagram illustrating an example of a configuration of a movement management system according to a first embodiment.
FIG. 2 is an example of a physical configuration of the movement management system according to the first embodiment.
FIG. 3 is a diagram illustrating an example of a train position information table according to the first embodiment.
FIG. 4 is a diagram illustrating an example of a beacon information table according to the first embodiment.
FIG. 5 is a diagram illustrating an example of a pair information table according to the first embodiment.
FIG. 6 is a diagram illustrating an example of a passenger position information table according to the first embodiment.
FIG. 7 is a diagram illustrating an example of a passenger movement information table according to the first embodiment.
FIG. 8 is a diagram illustrating an example of a passenger fare information table according to the first embodiment.
FIG. 9 is a diagram illustrating an example of a passenger charge information table according to the first embodiment.
FIG. 10 is a diagram illustrating an example of a passenger reservation information table according to the first embodiment.
FIG. 11 is a diagram illustrating an example of a flowchart of in-movement processing according to the first embodiment.
FIG. 12 is a diagram illustrating an example of conditions according to the first embodiment.
FIG. 13 is a diagram illustrating an example of a flowchart of movement calculation processing according to the first embodiment.
FIG. 14 is a diagram illustrating an example of a screen according to the first embodiment.
FIG. 15 is a diagram illustrating an example of a screen according to the first embodiment.
FIG. 16 is a diagram illustrating an example of a flowchart of in-movement processing according to a second embodiment.
FIG. 17 is a diagram illustrating an example of a configuration of a movement management system according to a third embodiment.
FIG. 18 is a diagram illustrating an example of a flowchart of pair information generation processing according to the third embodiment.
FIG. 19 is a diagram illustrating an example of a flowchart of in-movement processing according to the third embodiment.

### Modes for Carrying Out the Invention

Hereinafter, one embodiment of the present invention will be described in detail referring to the drawings.

Note that, in the following description, in the case where elements of the same kind are to be collectively described with no distinction, a common portion of a reference sign including a branch number (i.e., a portion other than the branch number) may be used, whereas in the case where the elements of the same kind are to be individually described with distinctions, the reference sign including the branch number may be used. For example, in the case where terminals are to be collectively described with no particular distinction, the terminals may be described such as "terminal 120," whereas in the case where the terminals are to be individually described with distinctions, the terminals may be described such as "terminal 120-1" and "terminal 120-2."

### (1) First embodiment

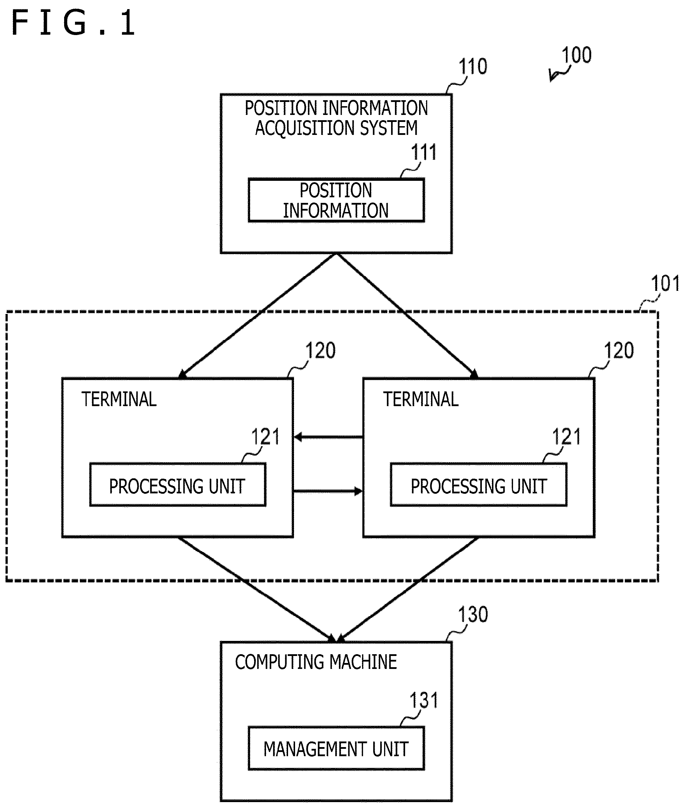

In FIG. 1, 100 indicates, as a whole, a movement management system according to a first embodiment. The movement management system 100 manages the movements of users by mobilities 101.

Each of the mobilities 101 is a vehicle (mobility) by which a plurality of users moves together. The mobilities 101 are transportation such as trains and/or buses.

The movement management system 100 includes position information 111 having been acquired by a position information acquisition system 110; processing units 121 each constituting a corresponding one of terminals 120 each possessed by a corresponding one of users; and a management unit 131 equipped in a computing machine 130 that performs calculation regarding the movements of the users.

The position information acquisition system 110 is a device that acquires position information that enables identification of the positions of mobilities, and is, for example, a GPS (global positioning system), a beacon terminal, WIFI (registered trademark), an information processing terminal that acquires position information from these systems, or a train terminal (a train operation management system, a signal system, a train itself, or the like that calculates position information regarding trains by using track circuits, treadles, axle counters, check-in check-out methods, or the like).

Each of the terminals 120 is a computer capable of performing various kinds of processing, and communicating with external devices, and is a mobile terminal such as a smartphone, a tablet terminal, or a smartwatch.

The computing machine 130 is a computing machine capable of performing various kinds of processing, and communicating with external devices, and is, for example, a server device.

In the movement management system 100, the position information acquisition system 110 and each of the terminals 120 are communicably connected to each other. Further, each of the terminals 120 and the computing machine 130 are communicably connected to each other.

Basically, the terminal 120 acquires position information from the position information acquisition system 110, and transmits the acquired position information and identification information that enables identification of the terminal 120 to the computing machine 130. The computing machine 130 is capable of identifying the position of a user possessing the terminal 120 from the position information and the identification information of the terminal 120. For example, the computing machine 130 may identify a position at which the user has started a movement utilizing a mobility 101, and a position at which the user has ended the movement. Further, for example, the computing machine 130 may calculate fare, according to one or more sections where the user has utilized the mobility 101. Here, the computing machine 130 may manage the position information and the identification information of the terminal 120 in a state in which these two kinds of information are associated with time information. The time information may be instantaneous-time information having no time width or may be period-of-time information having a time width. Such time information, for example, allows the position information regarding the user to be compared with actual operation information regarding transportation, thereby enabling further accurate identification of the positions of the user.

In this case, however, a situation (namely, a situation in which the inside of the mobility 101 is crowed with users, a situation in which the standing position of the user inside the mobility 101 is inappropriate, or the like) may disable the terminal 120 to acquire the position information from the position information acquisition system 110. In view of such a situation, the terminal 120 is broadcasting complementary information for complementing the position information toward one or more terminals 120 existing around the terminal 120.

For the broadcasting of the complementary information, there are various cases such as a case where the complementary information is broadcasted by a terminal 120 incapable of acquiring the position information, a case where the complementary information is broadcasted by a terminal 120 having successfully acquired the position information, and a case where the complementary information is broadcasted by a terminal 120 incapable of accessing the position information. The complementary information differs according to an occurred case, and is identification information of the terminal 120 or the acquired position information.

The movement management system 100 is characterized in that, for example, for a terminal 120 incapable of acquiring the position information, position information regarding the terminal 120 is indirectly identified from the complementary information.

For example, communication among adjacent terminals 120 is performed in a crowded condition, and thereby pair information showing that two or more users exist at the same place is generated. A terminal 120 capable of communicating with a beacon terminal (an example of the position information acquisition system 110) installed at a station, a train, or the like and used for identifying position information generates position information of the terminal 120 itself on the basis of beacon information from the beacon terminal, and transmits the generated position information regarding the terminal 120 itself to the computing machine 130. By combining the pair information with the position information regarding the terminal 120 having succeeded in the direct communication with the beacon terminal, the computing machine 130 is capable of, even for a terminal 120 incapable of directly communicating with the beacon terminal, generating position information regarding a user possessing such a terminal 120, and detecting the movements of the user.

The following description will be made by taking, as an example, a case where the movement management system 100 is a hand-free ticketing system that performs fare calculation by detecting the movements of a user and thereby grasping the statuses of the usages of transportation by the user. Further, the description will be made by taking a train as an example of the mobility, and taking the beacon terminal as an example of the position information acquisition system 110.

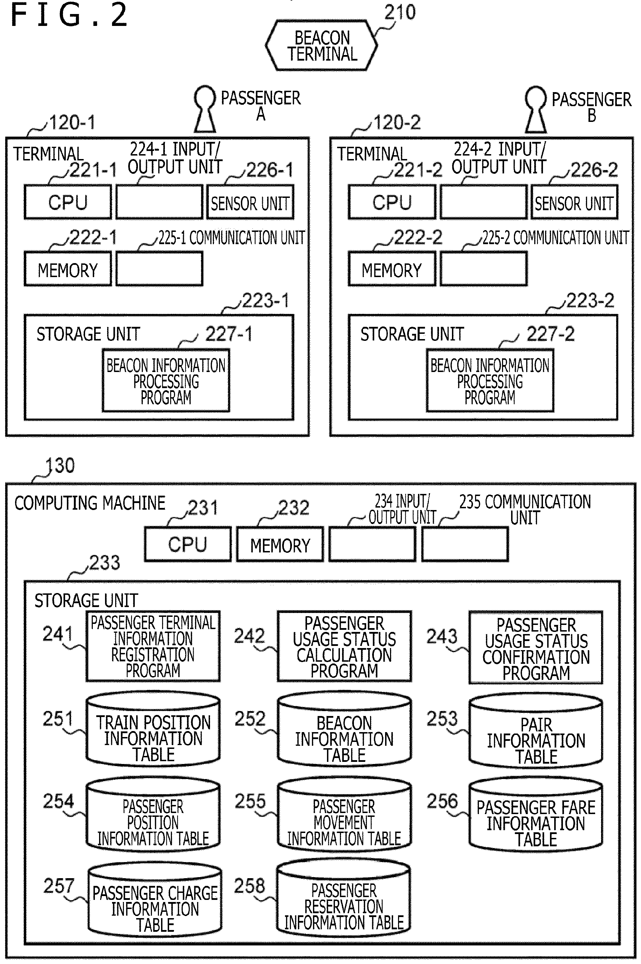

FIG. 2 is a diagram illustrating an example of a physical configuration of the movement management system 100.

A beacon terminal 210 is installed at a train, facilities such as a station, or the like, and broadcasts beacon information by utilizing wireless technology such as BLUETOOTH. The beacon information is an example of position information that enables identification of the position of a train.

The terminal 120 is a mobile terminal possessed by each of passengers (an example of the users). A terminal for a passenger A is denoted by a terminal 120-1, and a terminal for a passenger B may be denoted by a terminal 120-2.

The terminal 120 includes a CPU (Central Processing Unit) 221, a memory 222, a storage unit 223, an input/output unit 224, a communication unit 225, and a sensor unit 226. The CPU 221 performs various kinds of arithmetic operations. The memory 222 is, for example, a RAM (Random Access Memory), and stores temporal information related to the arithmetic operation by the CPU 221. The storage unit 223 is, for example, an HDD (Hard Disk Drive), and stores various kinds of data, and various kinds of programs such as a beacon information processing program 227. The input/output unit 224 is, for example, a touch panel, and performs inputting/outputting. The communication unit 225 performs communication with other terminals 120, the computing machine 130, and other devices via a network such as BLUETOOTH or a wireless LAN. The sensor unit 226 is, for example, an acceleration sensor.

The functions (the processing unit 121, and the like) of the terminal 120 may be implemented by allowing the CPU 221 to read a program stored in the storage unit 223 into the memory 222 and execute the program (that is, may be implemented by software), may be implemented by hardware such as dedicated circuits, or may be implemented by combination of the software and the hardware. Further, partial functions of the functions of the terminal 120 may be implemented by one or more other computers capable of communicating with the terminal 120.

The computing machine 130 collects movement information regarding passengers and performs fare calculation. The computing machine 130 includes a CPU 231, a memory 232, a storage unit 233, an input/output unit 234, and a communication unit 235. The CPU 231 performs various kinds of arithmetic operations. The memory 222 is, for example, a RAM, and stores temporal information related to the arithmetic operation by the CPU 231.

The storage unit 233 is, for example, an HDD (Hard Disk Drive), and stores various kinds of data and various kinds of programs. The storage unit 233 stores, as the programs, for example, a passenger terminal information registration program 241, a passenger usage status calculation program 242, and a passenger usage status confirmation program 243. Further, the storage unit 233 stores, as data, for example, a train position information table 251, a beacon information table 252, a pair information table 253, a passenger position information table 254, a passenger movement information table 255, a passenger fare information table 256, a passenger charge information table 257, and passenger reservation information table 258.

The input/output unit 234 corresponds to, for example, a keyboard, a pointing device, a display, and other inputting components, and performs inputting/outputting. The communication unit 235 performs communication with the terminals 120 and the like via a network such as a wireless LAN.

The functions (the management unit 131, and the like) of the computing machine 130 may be implemented by allowing the CPU 231 to read a program stored in the storage unit 233 into the memory 232 and execute the program (that is, may be implemented by software), may be implemented by hardware such as dedicated circuits, or may be implemented by combination of the software and the hardware. Further, partial functions of the functions of the computing machine 130 may be implemented by one or more other computers capable of communicating with the computing machine 130.

The beacon terminal 210 and each of the terminals 120 communicate with each other by using a wireless communication means such as BLUETOOTH. Further, each of the terminals 120 and the computing machine 130 communicate with each other by using a wireless communication means.

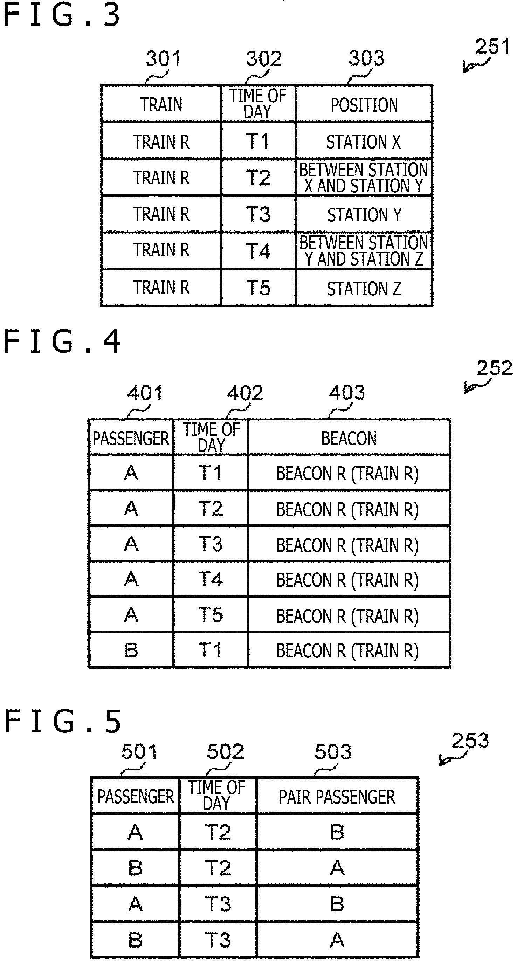

FIG. 3 is a diagram illustrating an example of the train position information table 251. The train position information table 251 stores position information associated with trains and transmitted from the train terminals. For the granularity of the position, there are some units such as a unit of the latitude and longitude of the GPS, and a unit of the management by the signal system. In order to make the position information usable in the fare calculation, the position information is converted into position information having granularity defined according to relations with the positions of stations and the like that become points in the definition, and then is stored.

For example, the train position information table 251 stores sets of information in which a train 301, a time of day 302, and a position 303 are associated with one another. The train 301 is identification information (for example, an ID (identifier)) that enables identification of a train. The time of day 302 is time information that enables identification of a time at which the train has been located at the position 303. For example, the time of day 302 may be a time at which the position 303 has been acquired by the train terminal, may be a time at which the position information has been transmitted from the train terminal to the computing machine 130, may be a time at which the computing machine 130 has received the time information, or may be a time at which the computing machine 130 has stored the position information into the train position information table 251. The position 303 is position information that enables identification of the position of the train. Note that, in the present example, for the purpose of the fare calculation, position information having been data-processed is registered, but without being limited to such data-processed position information, position information having not been data-processed, such as the latitude and longitude, may be registered. Additionally, in the case where the position 303 is position information indicating a section (range), the time of day 302 may be time information indicating a period of time.

FIG. 4 is a diagram illustrating an example of the beacon information table 252. The beacon information table 252 stores information associated with the beacon terminal 210 and having been received by the terminal 120 (for example, beacon information).

For beacon information, there are two kinds of beacon information, one kind being beacon information broadcasted from the beacon terminal 210, the other kind being beacon information broadcasted from a terminal 120, and the beacon information table 252 stores the beacon information broadcasted from the beacon terminal 210.

The beacon information broadcasted from the beacon terminal 210 includes identification information (for example, a beacon ID) that enables identification of the beacon terminal 210 having broadcasted the beacon information. A terminal 120 having received the beacon information having been broadcasted from the beacon terminal 210 transmits the received beacon information (for example, the beacon ID) to the computing machine 130. Here, in the case where the computing machine 130 has received the beacon information (for example, the beacon ID), the computing machine 130 is capable of identifying a train equipped with the beacon terminal 210 having broadcasted the beacon information, from information indicating beacon terminals 210 equipped in trains (namely, information in which trains and beacon IDs are associated with each other, the illustration of this information being omitted). That is, the computing machine 130 is capable of determining that a passenger possessing the terminal 120 having transmitted the beacon information is on the train.

The beacon information broadcasted from the terminal 120 includes identification information (for example, a terminal ID) that enables identification of the terminal 120 having broadcasted the beacon information. A second terminal 120 having received beacon information having been broadcasted from a first terminal 120 transmits the terminal ID of the self-terminal and the received terminal ID of the first terminal 120 to the computing machine 130. The computing machine 130 is capable of, in the case where the beacon information of the first terminal is registered, determining that a passenger possessing the first terminal 120 is on the same train as that of a passenger possessing the second terminal 120, on the basis of the beacon information of the first terminal.

For example, the beacon information table 256 stores sets of information in which a passenger 401, a time of day 402, and a beacon 403 are associated with one another. The passenger 401 is identification information that enables identification of a passenger. The time of day 402 is time information that enables identification of a time at which the passenger acquired beacon information. The time of day 402 may be time information at which the beacon terminal 210 has broadcasted beacon information, may be time information at which a terminal 120 has received the beacon information of the beacon terminal 210, may be time information at which the terminal 120 has transmitted the beacon information of the beacon terminal 210 to the computing machine 130, or may be time information at which the computing machine 130 has received the beacon information of the beacon terminal 210. The beacon 403 is identification information that enables identification of a beacon terminal 210 having broadcasted the beacon information having been acquired by the passenger (or identification information that enables identification of a train equipped with the beacon terminal 210 having broadcasted the beacon information).

FIG. 5 is a diagram illustrating an example of the pair information table 253. The pair information table 253 stores information indicating that two or more passengers have been at the same place at the same time of day (namely, pair information).

The pair information includes identification information that enables identification of one passenger, identification information that enables identification of the other one passenger, and time information indicating a time at which the one passenger and the other one passenger have been on the same train.

For example, the pair information table 253 stores sets of information in which a passenger 501, a time of day 502, and a pair passenger 503 are associated with one another. The passenger 501 is identification information that enables identification of one passenger. The time of day 502 is time information that enables identification of a time at which the one passenger has been at the same place as that of the other one passenger. For example, the time of day 502 may be a time at which a terminal 120 has transmitted pair information to the computing machine 130, may be a time at which the computing machine 130 has received the pair information having been transmitted from the terminal 120, or may be a time at which the computing machine 130 has stored the pair information having been transmitted from the terminal 120. The pair passenger 503 is identification information that enables identification of the other one passenger having been at the same place as that of the one passenger. The present example indicates that a passenger A and a passenger B have been at the same place at a time of day T2 and a time of day T3.

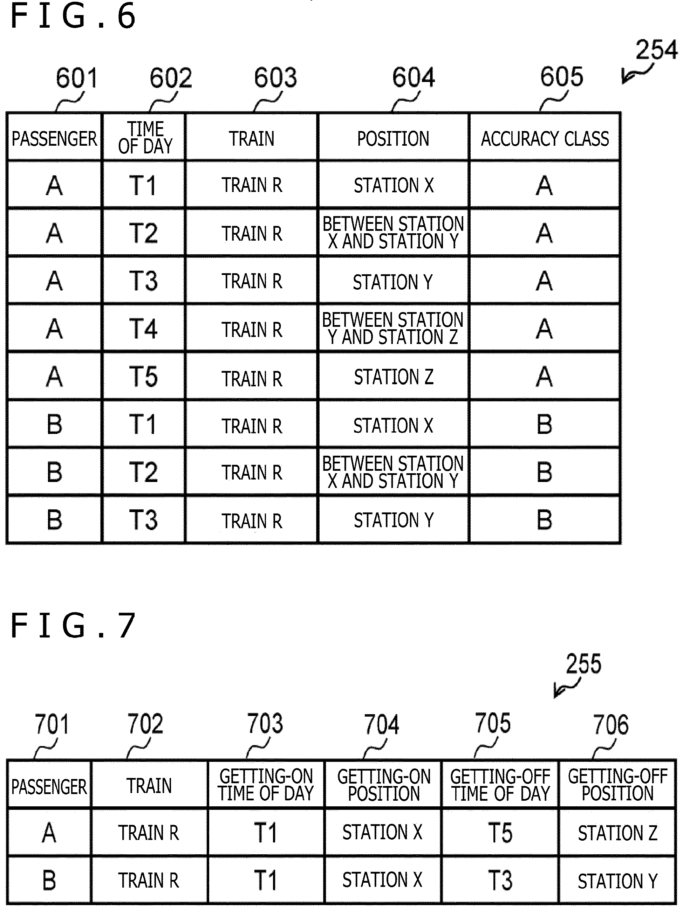

FIG. 6 is a diagram illustrating an example of the passenger position information table 254. The passenger position information table 254 stores position information regarding passengers (namely, passenger position information).

For the passenger position information, there are two kinds of position information, one kind being position information associated with a terminal 120 and identified by the receipt of beacon information by the terminal 120 (namely, direct position information), the other kind being position information associated with a first terminal 120 and identified by both of complementary information having been transmitted from the first terminal 120 to a second terminal and beacon information having been received by the second terminal (namely, indirect position information). Note that, although detailed description will be made later, the direct position information is identified from the train position information table 251 and the beacon information table 252, and the indirect position information is identified from the passenger position information table 254 (or the train position information table 251 and the beacon information table 252) and the pair information table 253.

For example, the passenger position information table 254 stores sets of information in which a passenger 601, a time of day 602, a train 603, a position 604, and an accuracy class 605 are associated with one another. The passenger 601 is identification information that enables identification of a passenger. The time of day 602 is time information indicating a time at which the passenger has been located at a position indicated by the position 604. The train 603 is identification information that enables identification of a train that the passenger has utilized. The position 604 is position information that enables identification of a position at which the train has been at the time of day 602. The accuracy class 605 is information indicating by which of direct identification from the beacon information and the like and indirect identification by the combination with the pair information the position of the passenger has been identified. In addition, for the train 603, information is stored in the case where a corresponding passenger is in the middle of a movement by a train and the identification of the train is already achieved.

FIG. 7 is a diagram illustrating an example of the passenger movement information table 255. The passenger movement information table 255 stores information regarding the movements of passengers by trains (namely, passenger movement information).

For example, the passenger movement information table 255 stores sets of information in which a passenger 701, a train 702, a getting-on time of day 703, a getting-on position 704, a getting-off time of day 705, and a getting-off position 706 are associated with one another.

The passenger 701 is identification information that enables identification of a passenger. The train 702 is identification information that enables identification of a train that the passenger utilized. The getting-on time of day 703 is time information indicating a time at which the passenger has got on the train. The getting-on position 704 is position information indicating a position at which the passenger has got on the train. The getting-off time of day 705 is time information indicating a time at which the passenger has got off the train. The getting-off position 706 is position information indicating a position at which the passenger has got off the train.

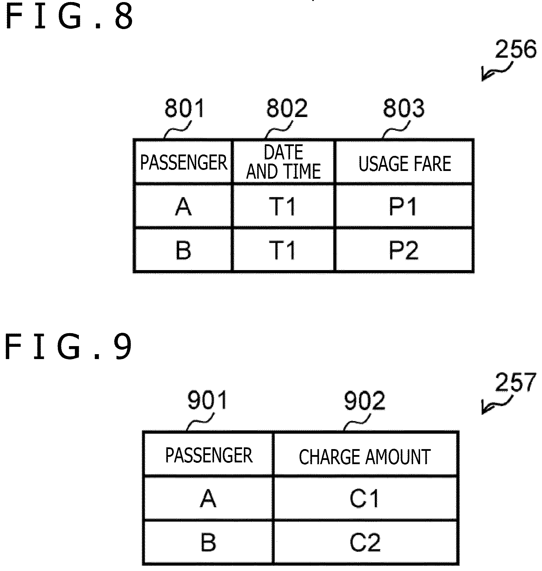

FIG. 8 is a diagram illustrating an example of the passenger fare information table 256. The passenger fare information table 256 stores information regarding fare having been incurred in connection with the usages of trains by passengers.

For example, the passenger fare information table 256 stores sets of information in which a passenger 801, a date and time 802, and usage fare 802 are associated with one another.

The passenger 801 is identification information that enables identification of a passenger. The date and time 802 is time information indicating a time at which the passenger has utilized a train. The usage fare 803 is fare information indicating fare having been incurred in connection with the usage of the train by the passenger.

FIG. 9 is a diagram illustrating an example of the passenger charge information table 257. The passenger charge table 257 is used in the case where the hand-free ticketing system employs a prepaid method, and money-received from an account (charge to an account) is performed in advance. The passenger charge information table 257 stores an amount of money having been charged to the passenger (namely, a charge amount).

For example, the passenger charge information table 257 stores sets of information in which a passenger 901 and a charge amount 902 is associated with each other.

The passenger 901 is identification information that enables identification of a passenger. The charge amount 902 is information indicating an amount of money having been charged to the passenger.

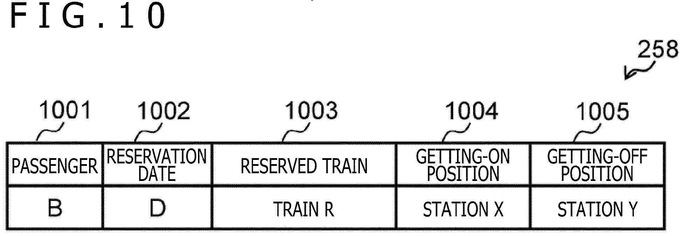

FIG. 10 is a diagram illustrating an example of the passenger reservation information table 258. The passenger reservation information table 258 is used in the case where the hand-free ticketing system employs a pre-reservation method. The passenger reservation information table 258 stores information regarding the reservations of trains by passengers.

For example, the passenger reservation information table 258 stores sets of information in which a passenger 1001, a reservation date 1002, a reserved train 1003, a getting-on position 1004, and a getting-off position 1005 are associated with one another.

The passenger 1001 is identification information that enables identification of a passenger. The reservation date 1002 is reservation date information indicating a date on which the passenger has reserved a train. The reserved train 1003 is identification information that enables identification of a train having been reserved by the passenger. The getting-on position 1004 is position information indicating a position (for example, a getting-on station) at which the passenger is to get on the reserved train. The getting-off position 1005 is position information indicating a position (for example, a getting-off station) at which the passenger is to get off the reserved train.

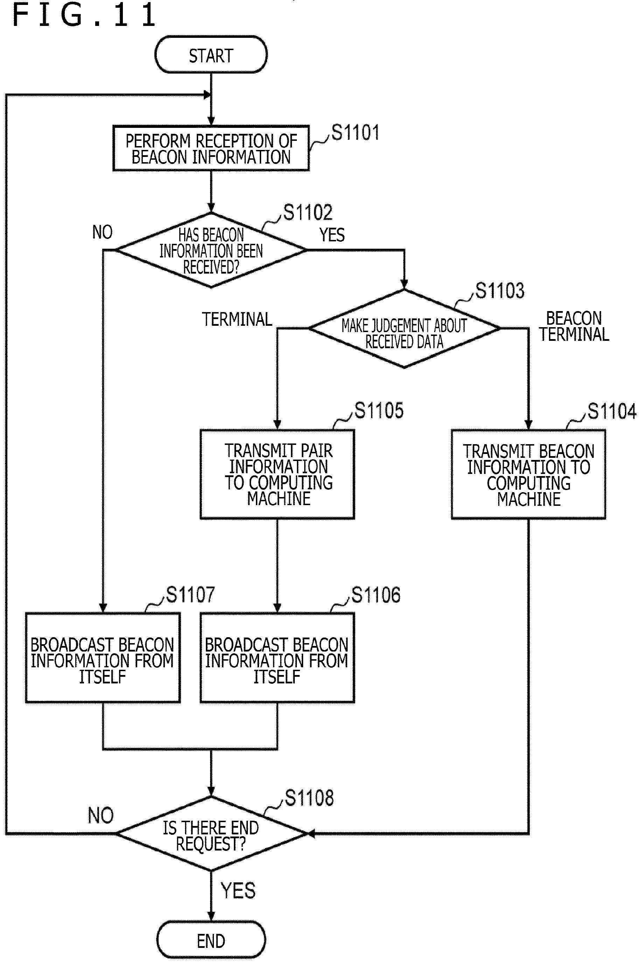

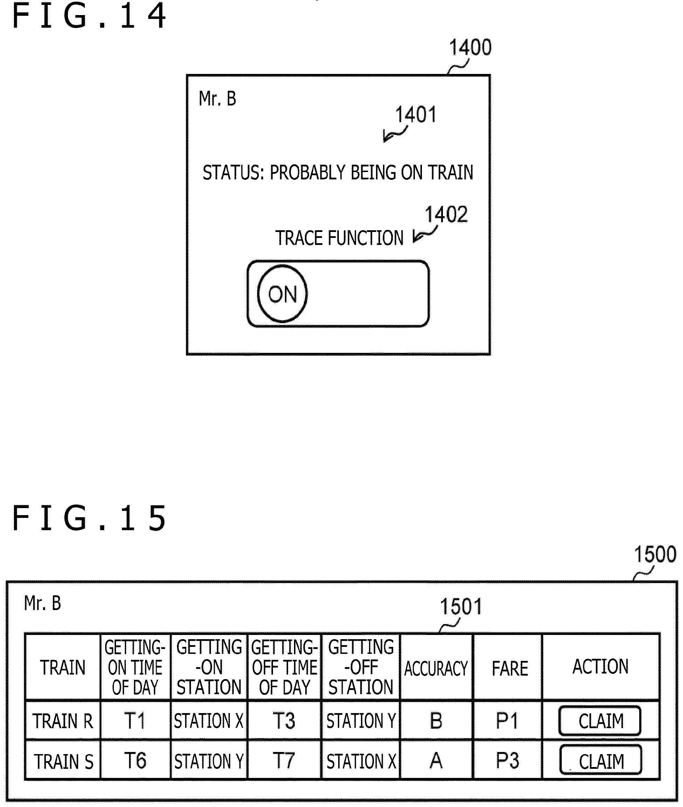

FIG. 11 is a diagram illustrating an example of a flowchart of processing (in-movement processing) executed by the processing unit 121 during a movement of a passenger. The processing unit 121 is activated by, for example, a passenger that is a user. Note that a screen displayed at the time of the activation of the processing unit 121 will be described later in detail by using FIG. 14.

In step S1101, the processing unit 121 performs the reception of beacon information. Note that beacon information having been broadcasted from the beacon terminal 210 includes a beacon ID, whereas beacon information having been broadcasted from a terminal 120 includes a terminal ID.

In step S1102, the processing unit 121 judges whether or not beacon information has been received within a constant period of time. In the case where the result of the judgement is that the beacon information has been received, the processing unit 121 moves the processing to step S1103, whereas in the case where the result of the judgement is that the beacon information has not been received, the processing unit 121 moves the processing to step S1107.

In step S1103, the processing unit 121 makes a judgement about received data. More specifically, in the case where the result of the judgement is that the received beacon information is beacon information from the beacon terminal 210, the processing unit 121 moves the processing to step S1104, whereas in the case where the result of the judgment is that the received beacon information is beacon information from a terminal 120, the processing unit 121 moves the processing to step S1105.

In step S1104, the processing unit 121 transmits the received beacon information to the computing machine 130. At this time, the processing unit 121 may transmit identification information (which is, for example, a passenger ID, or may be a terminal ID or the like) that enables identification of a passenger. The management unit 131 of the computing machine 130 receives the beacon information, and registers the received beacon information into the beacon information table 252.

In step S1105, the processing unit 121 transmits pair information to the computing machine 130. For example, in the case where a terminal 120-1 of a passenger A has received beacon information from a terminal 120-2 of a passenger B, pair information in which identification information of the passenger A is associated with identification information of the passenger B is generated. At this time, the management unit 131 of the computing machine 130 receives the pair information, and registers the received pair information into the pair information table 253.

In step S1106, the processing unit 121 broadcasts beacon information (beacon information of itself) from the self-terminal 120. The beacon information having been broadcasted here may be received by terminals 120 of other passengers.

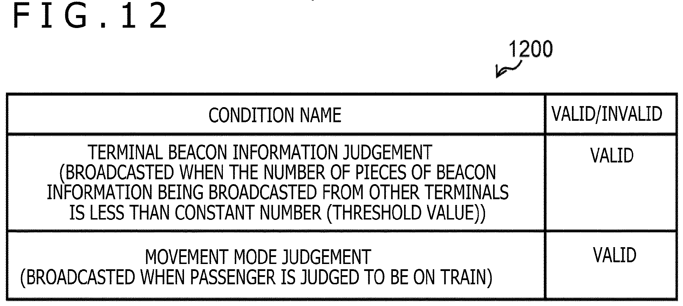

For example, when predetermined conditions are satisfied (for example, as illustrated in conditions 1200 of FIG. 12, when the result of a passenger terminal beacon information judgement is valid and the result of a movement mode judgement is valid), the processing unit 121 broadcasts the beacon information of itself.

More specifically, when the number of pieces of beacon information being broadcasted from terminals 120 of other passengers is less than a constant number (threshold value) (namely, when the result of the passenger terminal beacon information judgement is valid), and when a judgement about whether or not the passenger is on a train is made by using a sensor value of an acceleration sensor or the like and its result is that the passenger is on a train (namely, when the result of the movement mode judgement is valid), the processing unit 121 broadcasts the beacon information. Note that the above configuration may be implemented such that, in the case where any one of the results of the above judgements is valid, the processing unit 121 broadcasts the beacon information. Additionally, in the case where a large number of pieces of beacon information from other terminals 120 are being broadcasted, the processing unit 121 does not need to broadcast the beacon information so as to prevent interferences among the pieces of beacon information. Further, in the case where the movement of the passenger by a train is not being made, the situation in which the beacon information cannot be acquired because of the crowded condition of a train is unlikely to arise, and thus, the processing unit 121 does not need to broadcast the beacon information so as to reduce unnecessary communication.

In step S1107, the processing unit 121 broadcasts the beacon information of itself. The beacon information having been broadcasted here may be received by terminals 120 of other passengers.

In step S1108, the processing unit 121 judges whether or not there is an end request. In the case where the result of the judgement is that there is an end request, the processing unit 121 ends the in-movement processing, whereas in the case where the result of the judgement is that there is no end request, the processing unit 121 moves the processing to step S1101.

Note that, although the processing unit 121 sequentially transmits pieces of information to the computing machine 130 in each of steps S1104 and S1105, this configuration may be implemented such that the processing unit 121 accumulates a constant number of the pieces of information, and then transmits the accumulated pieces of information.

Further, although, while being activated, the processing unit 121 performs the reception of beacon information in step S1101, this configuration may be implemented such that the processing unit 121 judges whether or not the passenger is on a train, by using an acceleration sensor or the like included in the sensor unit 226, and performs the reception of beacon information when the passenger is on a train.

Further, when the processing unit 121 broadcasts beacon information in step S1106, the processing unit 121 may include, in the beacon information to be broadcasted, information (for example, a beacon ID) associated with the beacon terminal 210 and having been received most recently by the processing unit 121. In this case, when the processing unit 120 of a different terminal 120 has received the beacon information having been broadcasted by such the terminal 120, in step S1105, the processing unit 120 of the different terminal 120 may generate, in addition to or in substitution for the pair information, position information (beacon information to be broadcasted from the beacon terminal 210) from the received beacon information and may transmit the generated position information to the computing machine 130.

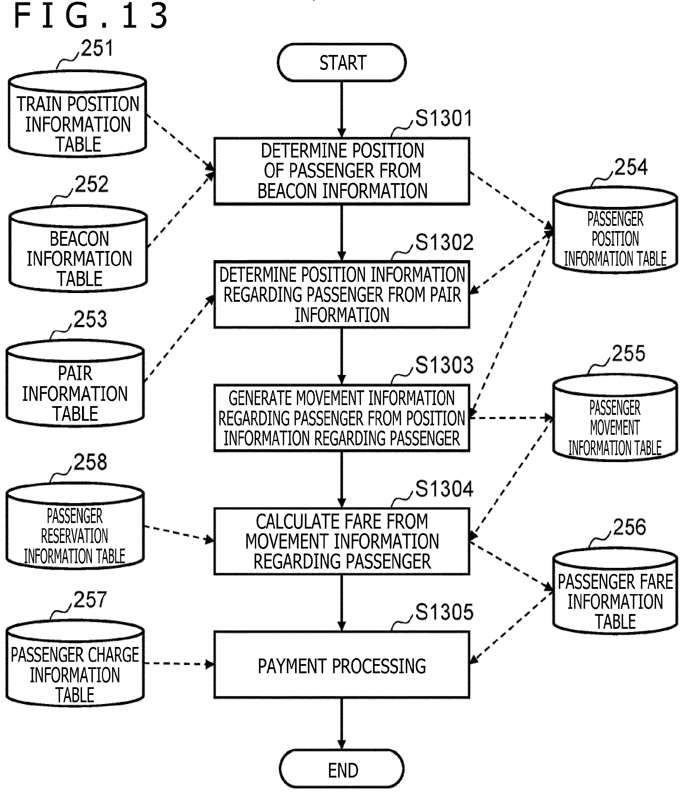

FIG. 13 is a diagram illustrating an example of a flowchart of processing (movement calculation processing) that the management unit 131 executes to perform calculation regarding the movements of passengers. The movement calculation processing may be executed in a batch at each interval of a constant period, or may be executed at a timing at which information has been received from a terminal 120.

In step S1301, the management unit 131 determines the position of a passenger from beacon information. More specifically, the management unit 131 generates position information regarding the passenger by referring to the train position information table 251 and the beacon information table 252, and registers the generated position information into the passenger position information table 254.

For example, according to the beacon information table 252, a passenger A received, at a time of day T1, beacon information of a beacon terminal 210, which indicates a train R. It can be found that the position of the train R at this time has been at a station X, by referring to the train position information table 251. Thus, the management unit 131 generates passenger position information indicating that the passenger A has been on the train R and has been located at the station X at the time of day T1, and registers the generated passenger position information into the passenger position information table 254.

In step S1302, the management unit 131 determines (identifies) position information regarding a passenger from pair information. More specifically, the management unit 131 generates position information regarding the passenger by referring to the passenger position information table 254 (which may be the train position information table 251 and the beacon information table 252) and the pair information table 253, and registers the generated position information into the passenger position information table 254.

For example, according to the pair information table 253, it can be found that a passenger B has been located near the passenger A at a time of day T2. By referring to the passenger position information table 254, it can be found that, at this time, the passenger A has been on the train R and has been located between the station X and a station Y. Thus, the management unit 131 generates passenger position information indicating that the passenger B has been on the train R and has been located between the station X and the Y station at the time of day T2, and registers the generated passenger position information into the passenger position information table 254.

In step S1303, the management unit 131 generates passenger movement information from the passenger position information. More specifically, by referring to the passenger position information table 254, the management unit 131 generates passenger movement information indicating how each passenger moved from which station to which station, and registers the generated passenger movement information into the passenger movement information table 255.

For example, according to the passenger position information table 254, it can be found that the passenger B has been located at the station X at the time of day T1; has been located between the station X and the station Y at the time of day T2; and has been located at the station Y at a time of day T3, and thereafter there is no record of getting on. Thus, the management unit 131 generates passenger movement information indicating that the passenger B has got on at the station X at the time of day T1 and has got off at the station Y at the time of day T3.

In step S1304, the management unit 131 calculates fare from the passenger movement information. The management unit 131 calculates fare by referring to the passenger movement information table 255, and reflects the calculated fare into the passenger fare information table 256.

For example, according to the passenger movement information table 255, the passenger B having used the train R as a transportation means from the station X to the station Y, and thus, the management unit 131 calculates usage fare P2, which is fare according to the usage. The fare calculation takes into account a capping system, which, in the case where a passenger has got on trains a predetermined times, does not charge to the passenger anymore, fare differences due to routes and/or train classes, and the like. In the case where, by referring to the passenger reservation information table 258, it has been found that a ticket has been reserved and prepayment therefor has already been made, charge for the ticket is not added to a billing amount.

In step S1305, the management unit 131 performs payment processing. In the case of a postpaid method, the management unit 131 makes a fare payment request on the basis of bank account information, credit card information, or the like that a passenger that is a user has registered in advance. In the case of a prepaid method, the management unit 131 reduces the charge from a charge amount by referring to the passenger charge information table 257.

FIG. 14 is a diagram illustrating an example of a screen (screen 1400) displayed on each terminal 120. The screen 1400 includes a display region 1401. A status indicating whether or not a passenger is on a train, or the like is displayed on the display region 1401.

For example, while the terminal 120 of a passenger has been receiving beacon information of a beacon terminal 210 installed at a train, a message "Passenger is on train" is displayed on the display region 1401. Further, in the case where it is deemed that the passenger is on a train according to information from the acceleration sensor or the like included in the sensor unit 226 but the terminal 120 of the passenger has been incapable of receiving the beacon information of the beacon terminal 210, a message "Probably passenger is on train" or the like is displayed on the display region 1401. In the case where it cannot be determined that the passenger is on a train even according to the information from the acceleration senor or the like and the terminal 120 of the passenger has been also incapable of receiving another beacon information, a message "Unclear" or the like is displayed on the display region 1401.

Further, the position information is related to the privacy of a passenger, and thus, in order to allow the passenger to specify whether or not to enable a trace function for capturing the position of the passenger by receiving beacon information and transmitting the received beacon information to the computing machine 130, a switch icon 1402 for turning ON/OFF of the trace function is provided on the screen 1400. Turning OFF of the trace function when the passenger is not using any train, that is, when being at home, office, or the like enables achievement of the elimination of waste communication and the protection of privacy.

FIG. 15 is a diagram illustrating an example of a screen (screen 1500) for allowing a passenger to confirm his or her usage status. The screen 1500 is displayed on a terminal 120, a personal computer (its illustration being omitted) of a passenger, or the like. When a terminal 120 or the like has made access to the computing machine 130, the computing machine 130 sends back information by referring to the passenger movement information table 255, the passenger fare information table 256, and the like. The terminal 120 or the like displays the resulting information.

The screen 1500 displays information regarding a section, where a passenger has utilized a train, fare, and the like. An accuracy 1501 is, for example, set to "A" in a sense that the accuracy is high in the case where the movement has been able to be estimated from the beacon information table 252, to "B" in a sense that the accuracy is slightly low in the case where the movement has been estimated in combination with the pair information table 253, and to any other class. In this case, the accuracy 151 may be set to a lower class in the case where the number of lacks of beacon information in the middle of a movement is large.

The present movement management system 100 is configured to, even in the case where the beacon information of the beacon terminal 210 cannot be stably received because of a crowded condition of a train, or the like, estimate the position of a passenger on the basis of pair information indicating that another passenger is on the same train as that of the passenger. This configuration enables enhancement of an accuracy of the capture of the movement of a passenger. Further, the terminal 120 is configured not to constantly broadcast beacon information, but to broadcast the beacon information in the case where beacon information of the beacon terminal 210 cannot be received during a movement means is utilized. This configuration enables achievement of the suppression of congestion of the beacon information and battery consumption of the terminal 120.

### (2) Second embodiment

The present embodiment is different from the first embodiment mainly in that position information is broadcasted as the complementary information. In the present embodiment, the same configuration as that of the first embodiment will be omitted from description, and mainly, different configurations will be described.

In the present embodiment, the description will be made by taking, as an example, a case where the position information acquisition system 110 is the GPS.

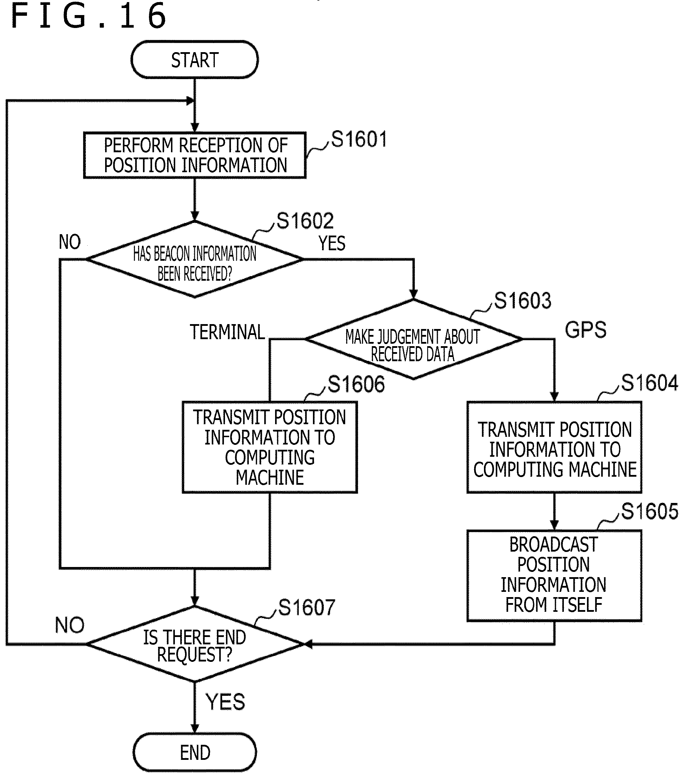

FIG. 16 is an example of a flowchart of processing (in-movement processing) that the processing unit 121 executes during a movement of a passenger.

In step S1601, the processing unit 121 performs the reception of position information from the GPS.

In step S1602, the processing unit 121 judges whether or not the position information has been received within a constant period of time. In the case where the result of the judgement is that the position information has been received, the processing unit 121 moves the processing to step S1603, whereas in the case where the result of the judgement is that the position information has not been received, the processing unit 121 moves the processing to step S1607.

In step S1603, in the case where the processing unit 121 has judged that the received position information (received data) is position information from the GPS, the processing unit 121 moves the processing to step S1604, whereas in the case where the processing unit 121 has judged that the received position information is position information from a different terminal 120, the processing unit 121 moves the processing to step S1606.

In step S1604, the processing unit 121 transmits the position information received from the GPS to the computing machine 130. At this time, the processing unit 121 may transmit the received position information together with additional information such as identification information that enables identification of a passenger possessing the self-terminal 120, and information indicating that the position information has been received from the GPS. The management unit 131 of the computing machine 130 receives the position information, and registers the received position information in a state in which the position information is associated with the identification information that enables identification of the passenger possessing the self-terminal 120. In addition, the management unit 131 may manage the position information in a state in which the position information is associated with time information indicating a time at which the position information has been received, and any other kind of information.

In step S1605, the processing unit 121 broadcasts the position information having been received by the self-terminal 120 (namely, position information of itself). The position information having been broadcasted here may be received by terminals 12 of other passengers.

In step S1606, the processing unit 121 transmits, to the computing machine 130, the position information having been received from the different terminal 120. At this time, the processing unit 121 may transmit the received position information together with additional information such as identification information that enables identification of the passenger possessing the self-terminal 120, and information indicating that the position information has been received from the different terminal 120. The management unit 131 of the computing machine 130 receives the position information, and registers the received position information in a state in which the received position information is associated with the identification information that enables identification of the passenger possessing the self- terminal 120. In addition, the management unit 131 may manage the position information in a state in which the position information is associated with time information indicating a time at which the position information has been received.

In step S1607, the processing unit 121 judges whether or not there is an end request. In the case where the result of the judgement is that there is an end request, the processing unit 121 ends the in-movement processing, whereas in the case where the result of the judgement is that there is no end request, the processing unit 121 moves the processing to step S1601.

Note that the present embodiment is not limited to the above-described content. For example, the above configuration may be implemented such that a terminal 120 incapable of receiving position information from the GPS broadcasts complementary information from itself.

For example, in the case where, in step S1602, a first terminal 120 incapable of receiving position information from the GPS has judged that no position information has been received, the first terminal 120 broadcasts identification information (for example, a passenger ID) of the self-terminal 120. The identification information having been broadcasted here may be received and stored by a second terminal 120. In the case where the second terminal 120 has acquired position information from the GPS, at a timing prior to or posterior to step S1604, the second terminal 120 transmits the acquired position information to the computing machine 130 in a state in which the acquired position information is associated with the stored identification information of the passenger possessing the first terminal.

The present embodiment, for example, makes it possible for the management unit to, even in the case where a terminal is incapable of acquiring position information regarding a mobility from a position information acquisition system, identify the position of a user possessing the terminal.

### (3) Third embodiment

The present embodiment is different from the first embodiment mainly in that the position information acquisition system 110 associates complementary information with position information. In the present embodiment, the same configuration as that of the first embodiment will be omitted from description, and mainly, different configurations will be described.

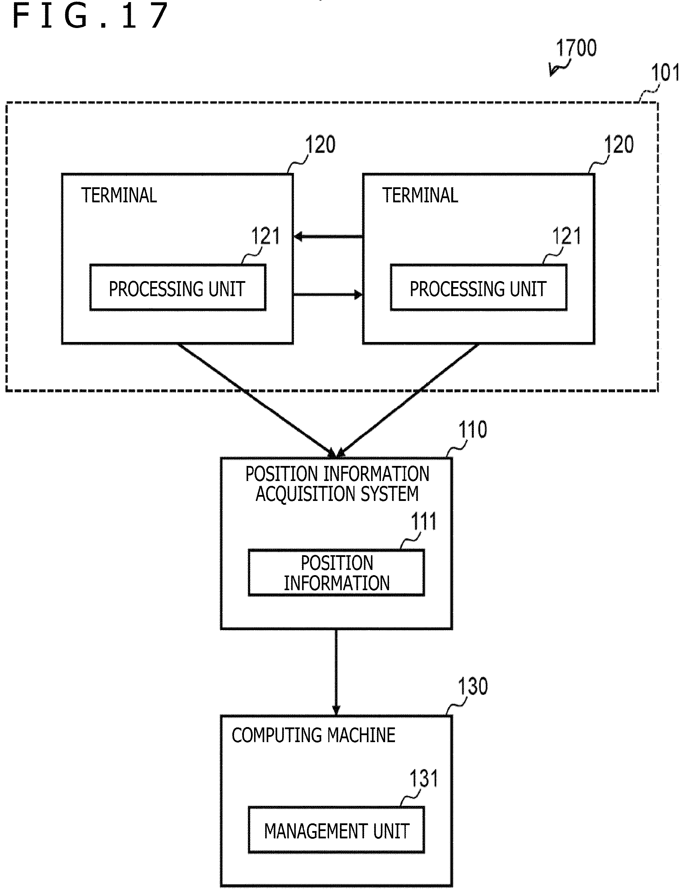

FIG. 17 is a diagram illustrating an example of a configuration of a movement management system 1700.

In the movement management system 1700, communication is performed among terminals 120, communication is performed between each of the terminals 120 and the position information acquisition system 110, and communication is performed between the position information acquisition system 110 and the computing machine 130. The following description will be made by taking, as an example, a case where the position information acquisition system 110 is a train terminal.

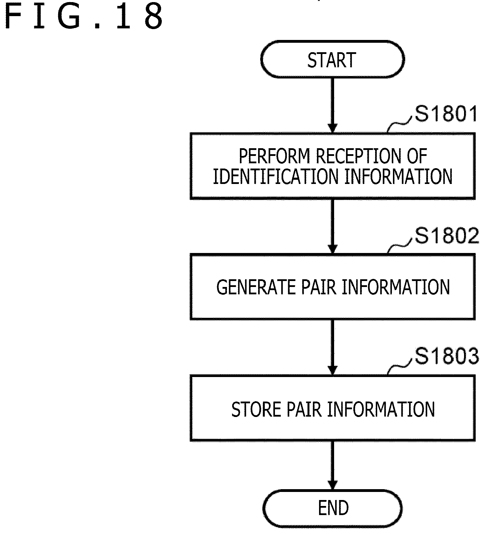

FIG. 18 is a diagram illustrating an example of a flowchart of processing (pair-information generation processing) that the processing unit 121 performs to generate pair information. The pair-information generation processing is periodically performed during the processing unit 121 is activated.

In step S1801, the processing unit 121 performs the reception of identification information of a passenger of a different terminal 120, from the different terminal 120.

In step S1802, the management unit 121 generates pair information. For example, the management unit 121 generates the pair information by associating identification information of a passenger of the self-terminal with the identification information of the passenger of the different terminal 120.

In step S1803, the processing unit 121 stores the generated pair information into the storage unit 223.

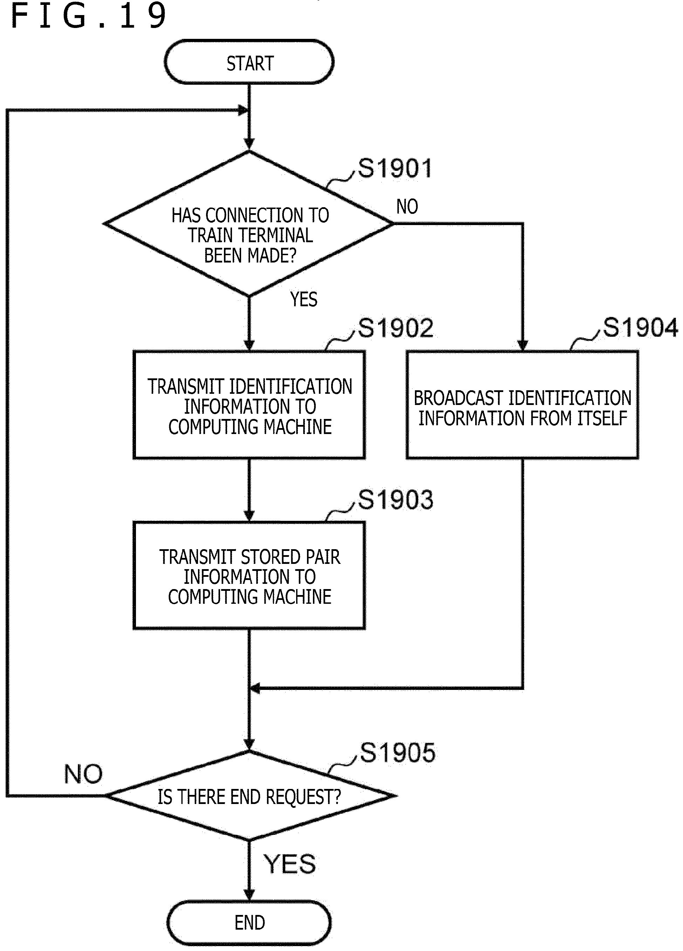

FIG. 19 is a diagram illustrating an example of a flowchart of processing (in-movement processing) that the processing unit 121 performs during a movement of a passenger.

In step S1901, the processing unit 121 judges whether or not a connection to a train terminal has been made. In the case where the result of the judgement is that the connection has been made, the processing unit 121 moves the processing to step S1902, whereas in the case where the result of the judgement is that the connection has not been made, the processing unit 121 moves the processing to step S1904.

In step S1902, the processing unit 121 transmits identification information of a passenger of the self-terminal 121 to the computing device 130.

In step S1903, the processing unit 121 transmits the stored pair information to the computing machine 130.

In step S1904, the processing unit 121 broadcasts, from itself, identification information (identification information of a passenger of the self-terminal 120).

In step S1905, the processing unit 121 judges whether or not there is an end request. In the case where the result of the judgement is that there is an end request, the processing unit 121 ends the in-movement processing, whereas in the case where the result of the judgement is that there is no end request, the processing unit 121 moves the processing to step S1901.

Note that the present embodiment is not limited to the above-described content. For example, the present embodiment may be configured such that a terminal 120 capable of connecting to the train terminal broadcasts complementary information from itself.

For example, in step S1901, in the case where a first terminal 120 capable of connecting to the train terminal has judged that a connection to the train terminal has been made, the first terminal 120 broadcasts identification information (for example, a passenger ID) of a passenger of the self-terminal 120. The identification information having been broadcasted here may be received and stored by a second terminal 120. In the case where the connection to the train terminal has not been made, at a timing prior to or posterior to step S1904, the second terminal 120 generates pair information by associating the stored identification information of the passenger of the first terminal 120 to identification information of a passenger of the second terminal 120, and transmits the generated pair information to the computing machine 130. Here, just like in the first embodiment, the computing machine 130 identifies the position of the second user from the pair information.

The present embodiment, for example, makes it possible for the management unit to, even in the case where a terminal is incapable of communicating with a position acquisition system, identify the position of a user possessing the terminal.

### (4) Other embodiments

Note that, in the above embodiments, cases where the present invention is applied to the movement management system and the hand-free ticketing system have been described, but without being limited to such cases, the present invention can be widely applied to other various kinds of systems, methods, and programs.

Further, in the above embodiments, the configurations of the individual tables are just examples, and any one of the tables may be separated into two or more tables, or the entire or a portion of any two or more of the tables may constitute one table.

Further, in the above embodiments, for the convenience of the description, the various kinds of data have been described using the XX tables, but the data structures thereof are not limited to those illustrated in the XX tables, and the various kinds of data may be each denoted by XX information or the like.

Further, in the above description, information, such as programs, tables, and files, which implements the individual functions can be placed on at least one of storage devices such as a memory, a hard disk, and an SSD (Solid State Drive), and/or at least one of recording media such as an IC card, an SD card, and a DVD.

Further, the present invention includes, for example, characteristic configurations as described below.

For example, the present invention is characterized in that a movement management system (for example, the movement management system 100, the movement management system 170, or the hand-free ticketing system) includes processing units (for example, the processing units 121) each constituting a corresponding one of terminals (for example, the terminals 120), and a management unit (for example, the management unit 131) that manages movements that are made by mobilities (the trains, buses, taxies, or the like) used by users (the passengers, travelers, drivers, or the like) each possessing a corresponding one of the terminals, and the movement management system is configured such that a first processing unit (for example, the processing unit 121-1) that constitutes a first terminal (for example, the terminal 120-1) possessed by a first user being moving by a mobility broadcasts complementary information (for example, identification information of a user of the terminal 120-1 (see the first and third embodiments)) for complementing a user's position (which may be the position itself, or may be an object (a place, a section, a movement route, or the like) associated with the position) and position information acquired from the position information acquisition system by the terminal 120-1 (see the second embodiment) toward one or more terminals existing around the first terminal; a second processing unit (for example, the processing unit 120-2) that constitutes a second terminal (for example, the terminal 120-2) possessed by a second user being different from the first user and being moving by the mobility is configured to, upon receipt of the complementary information, transmit the received complementary information to the management unit; and the management unit identifying a situation in which the second processing unit receives pair information generated based on the complementary information and the first user and the second user are moving by the mobility, on a basis of the pair information, and the pair information being information indicating that the first user and the second user were at the same place at the same time of day, and the pair information being configured to include identification information of the first user who owns the first terminal, identification information of the second user who owns the second terminal, and time information indicating time when the first user and the second user were at the same place.

The above configuration, for example, makes it possible for the management unit to, on the basis of complementary information indicating that terminals being on a mobility have performed near-field communication with each other, identify a situation in which users possessing the terminals are moving by the mobility, and thus, further accurately grasp the movements of the users by the mobility even when the mobility is crowded.

Further, the present invention is characterized in that the first processing unit broadcasts, as the complementary information, identification information (for example, a user ID or a terminal ID) of the first user toward one or more terminals existing around the first terminal; the second processing unit acquires position information regarding the mobility from a position information acquisition system (for example, the beacon terminal 210, the GPS, the WIFI, the information processing terminal that acquires position information from these systems, or the train terminal), and transmits the acquired position information and identification information of the second user to the management unit in a state in which the acquired position information is associated with the identification information of the second user; in a case where the second processing unit has received the identification information of the first user, the second processing unit transmits the received identification information to the management unit in a state in which the received identification information is associated with the identification information of the second user; the management unit identifies a position of the first user by, from the identification information of the second user, with which the identification information of the first user is associated, identifying the position information with which the identification information of the second user is associated, and determining the identified position information as position information regarding the first user; and the management unit identifies a position of the second user by determining the position information associated with the identification information of the second user as position information regarding the second user.

The above configuration, for example, makes it possible for the management unit to, even in the case where the first terminal is incapable of acquiring the position information regarding the mobility from the position information acquisition system, identify the position of the first user.

Further, for example, the present invention is characterized in that the first processing unit broadcasts, as the complementary information, identification information (for example, a terminal ID) of the first user to the one or more terminals existing around the first terminal; the second processing unit transmits identification information (for example, a terminal ID) of the second user to a position information acquisition information system (for example, the information processing terminal that acquires position information from the beacon terminal 210, the GPS, the WIFI, or the like, or the train terminal) configured to acquire position information regarding the mobility; in a case where the second processing unit has received the identification information of the first user, the second processing unit transmits the received identification information of the first user to the position information acquisition system; the position information acquisition system transmits the received identification information of the first user and acquired position information to the management unit in a state in which the received identification information of the first user is associated with the acquired position information, and transmits the received identification information of the second user and the acquired position information to the management unit in a state in which the received identification information of the second user is associated with the acquired position information; and the management unit identifies a position of the first user by determining the position information associated with the identification information of the first user as position information regarding the first user, and identifies a position of the second user by determining the position information associated with the identification information of the second user as position information regarding the second user.

The above configuration, for example, makes it possible for the management unit to, even in the case where the first terminal is incapable of communicating with the position information acquisition system, identify the position of the first user.

Further, for example, the present invention is characterized in that the first processing unit broadcasts the complementary information in a case where the position information is unavailable to accessing by the first processing unit (in a case where the position information regarding the mobility cannot be acquired from the position information acquisition system or in a case where communication with the position information acquisition system cannot be performed).

The above configuration, for example, makes it possible for the first processing unit to reduce communication amount by limiting the opportunity of broadcasting the complementary information to within a necessary range, and further, makes it possible to suppress the battery consumption in each of the terminals.

Further, for example, the present invention is characterized in that the first processing unit acquires position information regarding the mobility from a position information acquisition system (for example, the beacon terminal 210, the GPS, the WIFI, the information processing terminal that acquires position information from these systems, or the train terminal) to transmit the acquired position information and identification information of the first user to the management unit in a state in which the acquired position information is associated with the identification information of the first user, and to broadcast, as the complementary information, the acquired position information to the one or more users existing around the first terminal; in a case where the second processing unit has received the position information having been broadcasted from the first terminal, the second processing unit transmits the received position information and identification information regarding the second user to the management unit in a state in which the received position information is associated with the identification information of the second user; and the management unit identifies a position of the first user by determining the position information associated with the identification information of the first user as position information regarding the first user, and identifies a position of the second user by determining the position information associated with the identification information of the second user as position information regarding the second user.

The above configuration, for example, makes it possible for the management unit to, even in the case where the second terminal is incapable of acquiring the position information regarding the mobility from the position information acquisition system, identify the position of the second user.

Further, for example, the present invention is characterized in that the first terminal includes an acceleration sensor, and the first processing unit broadcasts the complementary information in a case where the first processing unit has detected a movement of the mobility from sensor information having been measured by the acceleration sensor.

The above configuration, for example, makes it possible for the first processing unit to reduce communication amount by limiting the opportunity of broadcasting the complementary information to within a necessary range, and further, makes it possible to suppress the battery consumption in each of the terminals.

Further, for example, the present invention is characterized in that the management unit outputs information regarding the position of the first user (for example, information of the passenger position information table 254, information of the passenger movement information table 255, information of the passenger fare information table 256, the screen 1500, or the like) (the information may be output in the form of displaying in the input/output unit 224, displaying in the input/output unit 234, sending of an e-mail to a specified e-mail address, printing by a printing device, outputting by a file, outputting by speech, or any other outputting form).

The above configuration, for example, makes it possible for users to grasp movements by mobilities.

### Reference Signs List

- 100:: Movement management system
- 110:: Position information acquisition system
- 120:: Terminal
- 121:: processing unit
- 130:: Computing machine
- 131:: Management unit

## Claims

1. A movement management system comprising:
a plurality of processing units (121) each constituting a corresponding one of a plurality of terminals (120); and
a management unit (131) adapted to manage movements that are made by mobilities (101) used by a plurality of users each possessing a corresponding one of the terminals (120), wherein
a first processing unit (121-1) that constitutes a first terminal (120-1) possessed by a first user being moving by a mobility (101), is adapted to broadcast complementary information for complementing a user's position toward one or more terminals (120) being among the terminals (120) and existing around the first terminal (120-1),
the complementary information being identification information of the first terminal (120-1) or position information acquired by the first terminal (120-1),
a second processing unit (121-2) that constitutes a second terminal (120-2) possessed by a second user being different from the first user and being moving by the mobility (101), is configured to, upon receipt of the complementary information, transmit the received complementary information to the management unit (131),
the management unit (131) identifying a situation in which the second processing unit (121-2) is configured to receive pair information generated based on the complementary information and the first user and the second user are moving by the mobility (101), on a basis of the pair information, and
the pair information being information indicating that the first user and the second user were at the same place at the same time of day, and the pair information being configured to include identification information of the first user who owns the first terminal (120-1), identification information of the second user who owns the second terminal (120-2), and time information indicating time when the first user and the second user were at the same place.

2. The movement management system according to claim 1, wherein
the first processing unit (121-1) is adapted to broadcast, as the complementary information, identification information of the first user to the one or more terminals (120) existing around the first terminal (120-1),
the second processing unit (121-2) is adapted to acquire position information regarding the mobility (101) from a position information acquisition system (110), is adapted to transmit the acquired position information and identification information of the second user to the management unit (131) in a state in which the acquired position information is associated with the identification information of the second user, and in a case where having received the identification information of the first user, the second processing unit is configured to transmit the received identification information of the first user and identification information of the second user to the management unit (131) in a state in which the received identification information of the first user is associated with the identification information of the second user,
the management unit (131) is configured to identify a position of the first user by, from the identification information of the second user with which the identification information of the first user is associated, to identify the position information with which the identification information of the second user is associated, and to determine the identified position information as position information regarding the first user, and identifies a position of the second user by determining the position information associated with the identification information of the second user as position information regarding the second user.

3. The movement management system according to claim 1, wherein
the first processing unit (121-1) is adapted to broadcast, as the complementary information, identification information of the first user to the one or more terminals (120) existing around the first terminal (120-1),
the second processing unit (121-2) is configured to transmit identification information of the second user to a position information acquisition information system configured to acquire position information regarding the mobility (101), and in a case where having received the identification information of the first user, the second processing unit is configured to transmit the received identification information of the first user to the position information acquisition system (110),
the position information acquisition system (110) is adapted to transmit the received identification information of the first user and acquired position information regarding the mobility (101) to the management unit (131) in a state in which the received identification information of the first user is associated with the acquired position information, and is adapted to transmit the received identification information of the second user and the acquired position information regarding the mobility (101) to the management unit (131) in a state in which the received identification information of the second user is associated with the acquired position information, and
the management unit (131) is adapted to identify a position of the first user by determining the position information associated with the identification information of the first user as position information regarding the first user, and identifies a position of the second user by determining the position information associated with the identification information of the second user as position information regarding the second user.

4. The movement management system according to claim 2 or claim 3, wherein
the first processing unit (121-1) is adapted to broadcast the complementary information in a case where the position information cannot be accessed by the first processing unit (121-1) .

5. The movement management system according to claim 1, wherein
the first processing unit (121-1) is adapted to acquire position information regarding the mobility (101) from a position information acquisition system (110) to transmit the acquired position information and identification information of the first user to the management unit (131) in a state in which the acquired position information is associated with the identification information of the first user, and to broadcast, as the complementary information, the acquired position information to the one or more terminals (120) existing around the first terminal (120-1),
in a case where the second processing unit (121-2) has received the position information broadcasted from the first terminal (120-1), the second processing unit (121-2) is adapted to transmit the received position information and identification information regarding the second user to the management unit (131) in a state in which the received position information is associated with the identification information of the second user, and
the management unit (131) is configured to identify a position of the first user by determining the position information associated with the identification information of the first user as position information regarding the first user, and to identify a position of the second user by determining the position information associated with the identification information of the second user as position information regarding the second user.

6. The movement management system according to claim 1, wherein
the first terminal (120-1) includes an acceleration sensor, and
the first processing unit (121-1) is adapted to broadcast the complementary information in a case where the first processing unit (121-1) has detected a movement of the mobility (101) from sensor information measured by the acceleration sensor.

7. The movement management system according to claim 1, wherein
the management unit (131) is adapted to ouput position information of the first user, which is stored in a passenger position information table, and position information indicating a getting-on position and getting- off position of the first user, which are stored in a passenger movement information table.

8. A movement management method for a movement management system including a plurality of processing units (121) each constituting a corresponding one of a plurality of terminals (120), and a management unit (131) that manages movements that are made by mobilities (101) used by a plurality of users each possessing a corresponding one of the terminals (120), the method comprising:
a first step of allowing a first processing unit (121-1) that constitutes a first terminal (120-1) possessed by a first user being moving by a mobility (101), to broadcast complementary information for complementing a user's position toward one or more terminals (120) being among the terminals (120) and existing around the first terminal (120-1);
a second step of allowing a second processing unit (121-2) that constitutes a second terminal (120-2) possessed by a second user being different from the first user and being moving by the mobility (101), to, upon receipt of the complementary information, transmit the received complementary information to the management unit (131); and
a third step of allowing the management unit (131) to identify a situation in which the second processing unit (121-2) receives pair information generated based on the complementary information and the first user and the second user are moving by the mobility (101), on a basis of the pair information,
wherein
the complementary information is identification information of the first terminal (120-1) or position information acquired by the first terminal (120-1), and
the pair information is information indicating that the first user and the second user were at the same place at the same time of day, and the pair information is configured by including identification information of the first user who owns the first terminal (120-1), identification information of the second user who owns the second terminal (120-2), and time information indicating time when the first user and the second user were at the same place.

## Patentansprüche

1. Bewegungsverwaltungssystem, das Folgendes umfasst:
eine Vielzahl von Verarbeitungseinheiten (121), die jeweils eines einer Vielzahl von Endgeräten (120) darstellen; und
eine Verwaltungseinheit (131), die angepasst ist, um Bewegungen zu verwalten, die von Bewegungseinheiten (101) ausgeführt werden, die von einer Vielzahl von Benutzern verwendet werden, die jeweils ein entsprechendes der Endgeräte (120) besitzen, wobei
eine erste Verarbeitungseinheit (121-1), die ein erstes Endgerät (120-1) darstellt, das im Besitz eines ersten Benutzers ist, der von einer Bewegungseinheit (101) bewegt wird, angepasst ist, um ergänzende Informationen mittels Broadcast zu senden, um die Position eines Benutzers in Richtung eines oder mehrerer Endgeräte (120) zu ergänzen, das oder die sich unter den Endgeräten (120) befindet/befinden und um das erste Endgerät (120-1) herum vorhanden ist/sind,
wobei die ergänzenden Informationen Identifizierungsinformationen des ersten Endgeräts (120-1) oder Positionsinformationen sind, die vom ersten Endgerät (120-1) erfasst wurden,
eine zweite Verarbeitungseinheit (121-2), die ein zweites Endgerät (120-2) darstellt, das im Besitz eines zweiten Benutzers ist, der sich vom ersten Benutzer unterscheidet und von der Bewegungseinheit (101) bewegt wird, ausgelegt ist, um bei Empfang der ergänzenden Informationen die empfangenen ergänzenden Informationen an die Verwaltungseinheit (131) zu senden,
wobei die Verwaltungseinheit (131) eine Situation, in der die zweite Verarbeitungseinheit (121-2) ausgelegt ist, um Paarinformationen zu empfangen, die basierend auf ergänzenden Informationen und der Bewegung des ersten Benutzers und des zweiten Benutzers durch die Bewegungseinheit (101) erzeugt werden, basierend auf den Paarinformationen identifiziert, und
die Paarinformationen Informationen sind, die angeben, dass der erste Benutzer und der zweite Benutzer zur selben Tageszeit am selben Ort waren, und die Paarinformationen ausgelegt sind, um Identifizierungsinformationen des ersten Benutzers, der im Besitz des ersten Endgeräts (120-1) ist, Identifizierungsinformationen des zweiten Benutzers, der im Besitz des zweiten Endgeräts (120-2) ist, und Zeitinformationen, die die Zeit angeben, zu der der erste Benutzer und der zweite Benutzer am selben Ort waren, zu umfassen.

2. Bewegungsverwaltungssystem nach Anspruch 1, wobei
die erste Verarbeitungseinheit (121-1) angepasst ist, um als die ergänzenden Informationen Identifizierungsinformationen des ersten Benutzers zu dem einen oder den mehreren Endgeräten (120) mittels Broadcast zu senden, die um das erste Endgerät (120-1) herum vorhanden sind,
die zweite Verarbeitungseinheit (121-2) angepasst ist, Positionsinformationen in Bezug auf die Bewegungseinheit (101) von einem Positionsinformationenerfassungssystem (110) zu erfassen und ausgelegt ist, die erfassten Positionsinformationen und Identifizierungsinformationen des zweiten Benutzers in einem Zustand, in dem die erfassten Positionsinformationen den Identifizierungsinformationen des zweiten Benutzers zugeordnet sind, an die Verwaltungseinheit (131) zu senden und in einem Fall, in dem die Identifizierungsinformationen des ersten Benutzers empfangen wurden, die zweite Verarbeitungseinheit ausgelegt ist, in einem Zustand, in dem die empfangenen Identifizierungsinformationen des ersten Benutzers den Identifizierungsinformationen des zweiten Benutzers zugeordnet sind, die empfangenen Identifizierungsinformationen des ersten Benutzers und Identifizierungsinformationen des zweiten Benutzers an die Verwaltungseinheit (131) zu senden,
die Verwaltungseinheit (131) ausgelegt ist, um die Position des ersten Benutzers aus den Identifizierungsinformationen des zweiten Benutzers, dem die Identifizierungsinformationen des ersten Benutzers zugeordnet sind, zu identifizieren, um die Positionsinformationen zu identifizieren, denen die Identifizierungsinformationen des zweiten Benutzers zugeordnet sind, und die identifizierten Positionsinformationen als Positionsinformationen in Bezug auf den ersten Benutzer zu bestimmen, und die Position des zweiten Benutzers durch Bestimmen von Positionsinformationen, die Identifizierungsinformationen des zweiten Benutzers zugeordnet sind, als Positionsinformationen in Bezug auf den zweiten Benutzer zu identifizieren.

3. Bewegungsverwaltungssystem nach Anspruch 1, wobei
die erste Verarbeitungseinheit (121-1) ausgelegt ist, als ergänzende Informationen Identifizierungsinformationen des ersten Benutzers zu dem einen oder den mehreren Endgeräten (120) mittels Broadcast zu senden, die um das erste Endgerät (120-1) herum vorhanden sind,
die zweite Verarbeitungseinheit (121-2) ausgelegt ist, Identifizierungsinformationen des zweiten Benutzers an ein Positionsinformationenerfassungsinformationssystem zu senden, um Positionsinformationen in Bezug auf die Bewegungseinheit (101) zu erfassen, und in einem Fall, indem die Identifizierungsinformationen des ersten Benutzers empfangen wurden, die zweite Verarbeitungseinheit ausgelegt ist, die empfangenen Identifizierungsinformationen des ersten Benutzers an das Positionsinformationenerfassungssystem (110) zu senden,
das Positionsinformationenerfassungssystem (110) angepasst ist, in einem Zustand, in dem die empfangenen Identifizierungsinformationen des ersten Benutzers den erfassten Positionsinformationen zugeordnet sind, die empfangenen Identifizierungsinformationen des ersten Benutzers und erfasste Positionsinformationen in Bezug auf die Bewegungseinheit (101) an die Verwaltungseinheit (131) zu senden, und angepasst ist, die empfangenen Identifizierungsinformationen des zweiten Benutzers und die erfassten Positionsinformationen in Bezug auf die Bewegungseinheit (101) in einem Zustand, in dem die empfangenen Identifizierungsinformationen des zweiten Benutzers den erfassten Positionsinformationen zugeordnet sind, an die Verwaltungseinheit (131) zu senden, und
die Verwaltungseinheit (131) angepasst ist, die Position des ersten Benutzers durch Bestimmen der Positionsinformationen, die den Identifizierungsinformationen des ersten Benutzers zugeordnet sind, als Positionsinformationen in Bezug auf den ersten Benutzer zu identifizieren, und die Position des zweiten Benutzers durch Bestimmen der Positionsinformationen, die den Identifizierungsinformationen des zweiten Benutzers zugeordnet sind, als Positionsinformationen in Bezug auf den zweiten Benutzer zu identifizieren.

4. Bewegungsverwaltungssystem nach Anspruch 2 oder Anspruch 3, wobei
die erste Verarbeitungseinheit (121-1) angepasst ist, die ergänzenden Informationen in einem Fall, in dem die erste Verarbeitungseinheit (121-1) nicht auf die Positionsinformationen zugreifen kann, mittels Broadcast zu senden.

5. Bewegungsverwaltungssystem nach Anspruch 1, wobei
die erste Verarbeitungseinheit (121-1) ausgelegt ist, Positionsinformationen in Bezug auf die Bewegungseinheit (101) von einem Positionsinformationenerfassungssystem (110) zu erfassen, um die erfassten Positionsinformationen und Identifizierungsinformationen des ersten Benutzers in einem Zustand, in dem die erfassten Positionsinformationen den Identifizierungsinformationen des ersten Benutzers zugeordnet sind, an die Verwaltungseinheit (131) zu senden und als die ergänzenden Informationen die erfassten Positionsinformationen an das eine oder die mehreren Endgeräte (120) mittels Broadcast zu senden, die um das erste Endgerät (120-1) herum vorhanden sind,
in einem Fall, in dem die zweite Verarbeitungseinheit (121-2) die Positionsinformationen empfangen hat, die vom ersten Endgerät (120-1) mittels Broadcast gesendet wurden, die zweite Verarbeitungseinheit (121-2) angepasst ist, die empfangenen Positionsinformationen und Identifizierungsinformationen in Bezug auf den zweiten Benutzer in einem Zustand, in dem die empfangenen Positionsinformationen den Identifizierungsinformationen des zweiten Benutzers zugeordnet sind, an die Verwaltungseinheit (131) zu senden, und
die Verwaltungseinheit (131) ausgelegt ist, die Position des ersten Benutzers durch Bestimmen der Positionsinformationen, die den Identifizierungsinformationen des ersten Benutzers zugeordnet sind, als Positionsinformationen in Bezug auf den ersten Benutzer zu identifizieren und
die Position des zweiten Benutzers durch Bestimmen der Positionsinformationen, die den Identifizierungsinformationen des zweiten Benutzers zugeordnet sind, als Positionsinformationen in Bezug auf den zweiten Benutzer zu identifizieren.

6. Bewegungsverwaltungssystem nach Anspruch 1, wobei
das erste Endgerät (120-1) einen Beschleunigungssensor umfasst und
die erste Verarbeitungseinheit (121-1) angepasst ist, die ergänzenden Informationen in einem Fall mittels Broadcast zu senden, in dem die erste Verarbeitungseinheit (121-1) eine Bewegung der Bewegungseinheit (101) aus Sensorinformationen detektiert hat, die vom Beschleunigungssensor gemessen wurden.

7. Bewegungsverwaltungssystem nach Anspruch 1, wobei
die Verwaltungseinheit (131) angepasst ist, Positionsinformationen des ersten Benutzers, die in einer Passagierpositionsinformationenstabelle gespeichert sind, und Positionsinformationen, die eine Einstiegsposition und eine Ausstiegsposition des ersten Benutzers angeben, die in einer Passagierbewegungsinformationentabelle gespeichert sind, auszugeben.

8. Bewegungsverwaltungsverfahren für ein Bewegungsverwaltungssystem, das eine Vielzahl von Verarbeitungseinheiten (121), die jeweils eines einer Vielzahl von Endgeräten (120) darstellen, und eine Verwaltungseinheit (131) umfasst, die angepasst ist, um Bewegungen zu verwalten, die von Bewegungseinheiten (101) ausgeführt werden, die von einer Vielzahl von Benutzern verwendet werden, die jeweils ein entsprechendes der Endgeräte (120) besitzen, wobei das Verfahren Folgendes umfasst:
einen ersten Schritt des Zulassens, dass eine erste Verarbeitungseinheit (121-1), die ein erstes Endgerät (120-1) darstellt, das im Besitz eines ersten Benutzers ist, der von einer Bewegungseinheit (101) bewegt wird, ergänzende Informationen mittels Broadcast sendet, um die Position eines Benutzers in Richtung zu einem oder mehreren Endgeräten (120) zu ergänzen, das/die sich unter den Endgeräten (120) befindet/befinden und um das erste Endgerät (120-1) herum vorhanden ist/sind;
einen zweiten Schritt des Zulassens, dass eine zweite Verarbeitungseinheit (121-2), die ein zweites Endgerät (120-2) darstellt, das im Besitz eines zweiten Benutzers ist, der sich vom ersten Benutzer unterscheidet und von der Bewegungseinheit (101) bewegt wird, bei Empfang der ergänzenden Informationen die empfangenen ergänzenden Informationen an die Verwaltungseinheit (131) sendet; und
einen dritten Schritt des Zulassens, dass die Verwaltungseinheit (131) eine Situation, in der die zweite Verarbeitungseinheit (121-2) Paarinformationen empfängt, die basierend auf ergänzenden Informationen und der Bewegung des ersten Benutzers und des zweiten Benutzers durch die Bewegungseinheit (101) erzeugt werden, basierend auf den Paarinformationen identifiziert,
wobei
die ergänzenden Informationen Identifizierungsinformationen des ersten Endgeräts (120-1) oder Positionsinformationen sind, die vom ersten Endgerät (120-1) erfasst werden, und
die Paarinformationen Informationen sind, die angeben, dass der erste Benutzer und der zweite Benutzer zur selben Tageszeit am selben Ort waren, und die Paarinformationen ausgelegt sind, um Identifizierungsinformationen des ersten Benutzers, der im Besitz des ersten Endgeräts (120-1) ist, Identifizierungsinformationen des zweiten Benutzers, der im Besitz des zweiten Endgeräts (120-2) ist, und Zeitinformationen, die die Zeit angeben, zu der der erste Benutzer und der zweite Benutzer am selben Ort waren, zu umfassen.

## Revendications

1. Système de gestion de déplacements, comprenant :
une pluralité d'unités de traitement (121) constituant chacune un terminal correspondant d'une pluralité de terminaux (120) ; et
une unité de gestion (131) apte à gérer des déplacements qui sont effectués par des moyens de mobilité (101) utilisés par une pluralité d'utilisateurs possédant chacun un terminal correspondant parmi les terminaux (120), dans laquelle
une première unité de traitement (121-1) qui constitue un premier terminal (120-1) possédé par un premier utilisateur se déplaçant par le biais d'un moyen de mobilité (101), et qui est apte à diffuser des informations complémentaires destinées à compléter la position d'un utilisateur vers un ou plusieurs terminaux (120) se trouvant parmi les terminaux (120) et existant autour du premier terminal (120-1) ;
dans lesquelles les informations complémentaires sont des informations d'identification du premier terminal (120-1) ou des informations de position acquises par le premier terminal (120-1) ;
une deuxième unité de traitement (121-2) qui constitue un deuxième terminal (120-2) possédé par un deuxième utilisateur, différent du premier utilisateur, se déplaçant par le biais du moyen de mobilité (101), et qui est configurée de manière à, suite à la réception des informations complémentaires, transmettre les informations complémentaires reçues à l'unité de gestion (131) ;
dans laquelle l'unité de gestion (131) est configurée de manière à identifier une situation dans laquelle la deuxième unité de traitement (121-2) reçoit des informations de paires générées sur la base des informations complémentaires, et dans laquelle le premier utilisateur et le deuxième utilisateur se déplacent par le biais du moyen de mobilité (101), sur la base des informations de paires ; et
dans lesquelles les informations de paires sont des informations indiquant que le premier utilisateur et le deuxième utilisateur se trouvaient au même endroit au même moment de la journée, et les informations de paires sont configurées de manière à inclure des informations d'identification du premier utilisateur qui possède le premier terminal (120-1), des informations d'identification du deuxième utilisateur qui possède le deuxième terminal (120-2), et des informations temporelles indiquant l'heure à laquelle le premier utilisateur et le deuxième utilisateur se trouvaient au même endroit.

2. Système de gestion de déplacements selon la revendication 1, dans lequel :
la première unité de traitement (121-1) est apte à diffuser, en tant que les informations complémentaires, les informations d'identification du premier utilisateur, audit un ou auxdits plusieurs terminaux (120) existant autour du premier terminal (120-1) ;
la deuxième unité de traitement (121-2) est apte à acquérir des informations de position concernant le moyen de mobilité (101), à partir d'un système d'acquisition d'informations de position (110), et est apte à transmettre les informations de position acquises et des informations d'identification du deuxième utilisateur, à l'unité de gestion (131), dans un état dans lequel les informations de position acquises sont associées aux informations d'identification du deuxième utilisateur, et dans un cas où, ayant reçu les informations d'identification du premier utilisateur, la deuxième unité de traitement est configurée de manière à transmettre les informations d'identification reçues du premier utilisateur et des informations d'identification du deuxième utilisateur, à l'unité de gestion (131), dans un état dans lequel les informations d'identification reçues du premier utilisateur sont associées aux informations d'identification du deuxième utilisateur ;
l'unité de gestion (131) est configurée de manière à identifier une position du premier utilisateur en déterminant, à partir des informations d'identification du deuxième utilisateur auxquelles les informations d'identification du premier utilisateur sont associées, les informations de position auxquelles les informations d'identification du deuxième utilisateur sont associées, à déterminer les informations de position identifiées en tant que des informations de position concernant le premier utilisateur, et à identifier une position du deuxième utilisateur en déterminant les informations de position associées aux informations d'identification du deuxième utilisateur en tant que des informations de position concernant le deuxième utilisateur.

3. Système de gestion de déplacements selon la revendication 1, dans lequel :
la première unité de traitement (121-1) est apte à diffuser, en tant que les informations complémentaires, des informations d'identification du premier utilisateur, audit un ou auxdits plusieurs terminaux (120) existant autour du premier terminal (120-1) ;
la deuxième unité de traitement (121-2) est configurée de manière à transmettre des informations d'identification du deuxième utilisateur à un système d'acquisition d'informations de position configuré de manière à acquérir des informations de position concernant le moyen de mobilité (101), et dans un cas où, ayant reçu les informations d'identification du premier utilisateur, la deuxième unité de traitement est configurée de manière à transmettre les informations d'identification reçues du premier utilisateur, au système d'acquisition d'informations de position (110) ;
le système d'acquisition d'informations de position (110) est apte à transmettre les informations d'identification reçues du premier utilisateur et des informations de position acquises concernant le moyen de mobilité (101), à l'unité de gestion (131), dans un état dans lequel les informations d'identification reçues du premier utilisateur sont associées aux informations de position acquises, et est apte à transmettre les informations d'identification reçues du deuxième utilisateur et les informations de position acquises concernant le moyen de mobilité (101), à l'unité de gestion (131), dans un état dans lequel les informations d'identification reçues du deuxième utilisateur sont associées aux informations de position acquises ; et
l'unité de gestion (131) est apte à identifier une position du premier utilisateur en déterminant les informations de position associées aux informations d'identification du premier utilisateur en tant que des informations de position concernant le premier utilisateur, et à identifier une position du deuxième utilisateur en déterminant les informations de position associées aux informations d'identification du deuxième utilisateur en tant que des informations de position concernant le deuxième utilisateur.

4. Système de gestion de déplacements selon la revendication 2 ou 3, dans lequel :
la première unité de traitement (121-1) est apte à diffuser les informations complémentaires dans un cas où la première unité de traitement (121-1) ne peut pas accéder aux informations de position.

5. Système de gestion de déplacements selon la revendication 1, dans lequel :
la première unité de traitement (121-1) est apte à acquérir des informations de position concernant le moyen de mobilité (101) à partir d'un système d'acquisition d'informations de position (110) pour transmettre les informations de position acquises et des informations d'identification du premier utilisateur, à l'unité de gestion (131), dans un état dans lequel les informations de position acquises sont associées aux informations d'identification du premier utilisateur, et à diffuser, en tant que les informations complémentaires, les informations de position acquises, audit un ou auxdits plusieurs terminaux (120) existant autour du premier terminal (120-1) ;
dans un cas où la deuxième unité de traitement (121-2) a reçu les informations de position diffusées par le premier terminal (120-1), la deuxième unité de traitement (121-2) est apte à transmettre les informations de position reçues et des informations d'identification concernant le deuxième utilisateur, à l'unité de gestion (131), dans un état dans lequel les informations de position reçues sont associées aux informations d'identification du deuxième utilisateur ; et
l'unité de gestion (131) est configurée de manière à identifier une position du premier utilisateur en déterminant les informations de position associées aux informations d'identification du premier utilisateur en tant que des informations de position concernant le premier utilisateur, et à identifier une position du deuxième utilisateur en déterminant les informations de position associées aux informations d'identification du deuxième utilisateur en tant que des informations de position concernant le deuxième utilisateur.

6. Système de gestion de déplacements selon la revendication 1, dans lequel :
le premier terminal (120-1) inclut un capteur d'accélération ; et
la première unité de traitement (121-1) est apte à diffuser les informations complémentaires dans un cas où la première unité de traitement (121-1) a détecté un déplacement du moyen de mobilité (101) à partir d'informations de capteur mesurées par le capteur d'accélération.

7. Système de gestion de déplacements selon la revendication 1, dans lequel :
l'unité de gestion (131) est apte à fournir en sortie des informations de position du premier utilisateur, qui sont stockées dans une table d'informations de position de passagers, et des informations de position indiquant une position de montée et une position de descente du premier utilisateur, qui sont stockées dans une table d'informations de déplacement de passagers.

8. Procédé de gestion de déplacements pour un système de gestion de déplacements incluant une pluralité d'unités de traitement (121) constituant chacune un terminal correspondant d'une pluralité de terminaux (120), et une unité de gestion (131) qui gère les déplacements qui sont effectués par des moyens de mobilité (101) utilisés par une pluralité d'utilisateurs possédant chacun un terminal correspondant parmi les terminaux (120), le procédé comprenant :
une première étape consistant à permettre, à une première unité de traitement (121-1) qui constitue un premier terminal (120-1) possédé par un premier utilisateur se déplaçant par le biais d'un moyen de mobilité (101), de diffuser des informations complémentaires destinées à compléter la position d'un utilisateur vers un ou plusieurs terminaux (120) se trouvant parmi les terminaux (120) et existant autour du premier terminal (120-1) ;
une deuxième étape consistant à permettre, à une deuxième unité de traitement (121-2) qui constitue un deuxième terminal (120-2) possédé par un deuxième utilisateur, différent du premier utilisateur, se déplaçant par le biais du moyen de mobilité (101), de transmettre, suite à la réception des informations complémentaires, les informations complémentaires reçues, à l'unité de gestion (131) ;
une troisième étape consistant à permettre à l'unité de gestion (131) d'identifier une situation dans laquelle la deuxième unité de traitement (121-2) reçoit des informations de paires générées sur la base des informations complémentaires, et dans laquelle le premier utilisateur et le deuxième utilisateur se déplacent par le biais du moyen de mobilité (101), sur la base des informations de paires ; dans lesquelles
les informations complémentaires sont des informations d'identification du premier terminal (120-1) ou des informations de position acquises par le premier terminal (120-1) ; et
les informations de paires sont des informations indiquant que le premier utilisateur et le deuxième utilisateur se trouvaient au même endroit au même moment de la journée, et les informations de paires sont configurées de manière à inclure des informations d'identification du premier utilisateur qui possède le premier terminal (120-1), des informations d'identification du deuxième utilisateur qui possède le deuxième terminal (120-2), et des informations temporelles indiquant l'heure à laquelle le premier utilisateur et le deuxième utilisateur se trouvaient au même endroit.
